# EUROPÄISCHE PATENTSCHRIFT

(11) **EP 4 404 599 B1**
(45) Veröffentlichungstag und Bekanntmachung des Hinweises auf die Patenterteilung: **04.03.2026**
(21) Anmeldenummer: 23152398.6
(22) Anmeldetag: 19.01.2023
(51) Int. Cl.: H04W 4/33, H04W 16/20, G01S 11/00, G01S 5/16, G01S 5/02, G01S 5/00, H04W 16/18, H04W 24/02, H04W 64/00

(54) **TECHNIKEN ZUR AUSMESSUNG VON ZUMINDEST ZWEI VERSCHIEDENEN FUNKSIGNALEN IN EINER UMGEBUNG**
TECHNIQUES FOR MEASURING AT LEAST TWO DIFFERENT RADIO SIGNALS IN AN ENVIRONMENT
TECHNIQUES POUR MESURER AU MOINS DEUX SIGNAUX RADIO DIFFÉRENTS DANS UN ENVIRONNEMENT

(43) Veröffentlichungstag der Anmeldung: 24.07.2024
(73) Patentinhaber: Deutsche Telekom AG, 53113 Bonn (DE)
(72) Erfinder: EL MALLOUKI, Said, 56329 St. Goar (DE); JAHN, Carl, 65191 Wiesbaden (DE); MINOW, Jascha, 64625 Bensheim (DE)
(74) Vertreter: karo IP

(56) Entgegenhaltungen:
- US-A1- 2022 108 532

## Beschreibung

Die vorliegende Erfindung betrifft das technische Gebiet zur geeigneten Ausmessung von zumindest zwei verschiedenen Funksignale in einer Umgebung, wobei die Erfindung insbesondere auch Techniken zur Positionierung von funkfähigen Geräten betrifft, insbesondere von funkfähigen Endgeräten eines Nutzers.

Die Positionierung von funkfähigen Geräten, die drahtlose Funksignale wie WLAN, insbesondere WiFi, oder Mobilfunk verwenden ist (vor allem in geschlossenen Räumen) eine häufig auszuführende Tätigkeit. Eine Herausforderung dieser Tätigkeit ist es, die Position innerhalb der Umgebung mit dem bestmöglichen Empfang zu finden. Hierbei werden Nutzer in der Regel technisch nur sehr ungenügend oder gar nicht unterstützt.

Diese Tätigkeit wird zudem deutlich schwieriger, falls es gilt die Position mit dem bestmöglichen Empfang nicht nur für ein einziges Funksignal, sondern für zumindest zwei Funksignale zu finden, wobei sich die zumindest zwei Funksignale zumindest teilweise überlagern.

Die bisher verwendeten Ansätze haben jedoch alle Schwachpunkte und weisen insbesondere Ungenauigkeiten auf und verlangen dem Nutzer viel Arbeit und Verständnis ab.

Der heutige Ansatz bei der Positionierung von funkfähigen Geräten ist zumeist der, dass der Nutzer wie mit einer Wünschelrute durch seine Wohnung oder sein Haus läuft und dann die entsprechenden Signalstärken angezeigt bekommt. Es obliegt nun dem Nutzer an der richtigen Stelle "Halt" zu machen. Dabei kann es beispielsweise auch vorkommen, dass der Nutzer "zu früh" eine Stelle als die richtige ansieht und bessere Stellen gar nicht entdeckt. Zudem muss sich der Nutzer alle schon bereits abgelaufenen Positionen und deren Signalstärke merken, um zu der Position mit dem besten Funkempfang zurückkehren zu können.

Zudem sind Lösungen bekannt bei den eine Heat-Map bezüglich der Funksignalstärke erstellt wird, wobei es auch bei diesen Lösungen dem Nutzer nachteilig selbst überlassen wird eine geeignete Position zur Positionierung seines Gerätes zu finden.

Ein guter Funkempfang, also ein Empfang mit hoher Signalstärke, der funkfähigen Geräte ist zur Sicherstellung eines hohen Quality-of-Services (QoS) jedoch sehr wichtig, um dem Nutzer eine gute Nutzererfahrung bereitzustellen und um manche Services überhaupt zufriedenstellend betreiben zu können.

Will der Nutzer zudem die optimale Position für zumindest zwei verschiedene Funksignale auffinden, fehlt es ihm zudem an technischen Hilfsmitteln diese optimale Position zu bestimmen. Für den Nutzer folgen hieraus auch Fragestellungen wie etwa, was eine optimale Position für den bestmöglichen Empfang bedeutet, wenn zwei verschiedene Funksignale zu berücksichtigen sind.

US 2022/108532 A1 offenbart ein Verfahren zur Ausmessung von zumindest zwei verschiedenen Funksignalen in einer Umgebung mittels eines Funksignalstärke-Test-Geräts, das ein Nutzer in verschiedene Positionen bringt.

Der vorliegenden Erfindung liegt daher die Aufgabe zu Grunde, Techniken anzugeben, die es einem Nutzer ermöglichen eine Umgebung mit mindestens zwei verschiedenen Funksignale auszumessen, wobei die Ausmessung insbesondere auch eine Analyse der Funksignale dahingehend umfasst, an welcher Position der Nutzer ein funkfähiges Gerät für einen guten Empfang positionieren sollte.

Die vorliegende Erfindung löst diese Aufgabe durch die Merkmale der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Weitere vorteilhafte Ausgestaltungsmerkmale der vorliegenden Erfindung sind in den Patentansprüchen definiert.

Erfindungsgemäß ist ein Verfahren zur Ausmessung von zumindest zwei verschiedenen Funksignalen in einer Umgebung angegeben, wobei das Verfahren die folgenden Schritte umfasst:
- Bereitstellung eines Funksignalstärke-Test-Geräts, wobei ein Nutzer das Funksignalstärke-Test-Gerät zu verschiedenen Positionen der Umgebung bringt, wobei das Funksignalstärke-Test-Gerät zumindest ein Erfassungsmittel für Funksignale aufweist;
   ∘ Funkfähigkeit des Gerätes kann im Zusammenhang dieser Erfindung bedeuten, dass das Gerät Funksignale empfangen kann oder dass das Gerät Funksignale empfangen und senden kann; das Funksignalstärke-Test-Gerät kann zumindest Funksignale empfangen;
   ∘ das Erfassungsmittel für Funksignalen kann als eine Antenne ausgebildet sein, die zumindest WLAN Funksignale und/oder Mobilfunksignale empfangen kann;
   ∘ das Funksignalstärke-Test-Geräts ist also insbesondere mobil und kann für den Nutzer leicht in einem dreidimensionalen Raum bewegt werden;
   ∘ bei der Umgebung kann es sich um geschlossene Räume, teilweise geschlossene Räume oder um eine Umgebung im Freien handeln;
- Aufzeichnen der jeweiligen Funksignalstärke der zwei verschiedenen Funksignale unterschiedlicher Sendequellen an den jeweiligen verschiedenen Positionen der Umgebung als Messwerte;
   ∘ die Messwerte können also zu einem Vektor zusammengefasst werden, der zumindest folgende Werte aufweisen kann (F_{1,i}, F_{2,i}) Hierbei steht F_{1, i} für die Feldstärke des ersten Funksignals und F_{2,i} für die Feldstärke des zweiten Funksignals an der jeweiligen Position i;
   ∘ der Nutzer kann das Aufzeichnen der entsprechenden Messwerte aktiv selbst beenden und/oder wieder aufnehmen; ein Beenden kann insbesondere dann sinnvoll sein, wenn in dem Raum weitere Bereiche existieren in denen das funkfähige Gerät gar nicht aufgestellt werden soll oder kann; das Wiederaufnehmen kann insbesondere dann von Vorteil sein, wenn der Nutzer beim Abscannen der Umgebung unterbrochen wurde, sodass der gesamte Vorgang nicht wieder aufgenommen werden muss, sondern einfach fortgesetzt werden kann;
- Übergabe der Messwerte an einen Positionierungs-Algorithmus, wobei der Positionierungs-Algorithmus die Messwerte vergleicht und anhand eines ersten festlegbaren Kriteriums einen ersten Score für die jeweiligen Positionen basierend auf den Messwerten berechnet, wobei der erste Score einen Wert für eine Güte der beiden verschiedenen Funksignale an der jeweiligen Positionen repräsentiert.
   ∘ die Güte kann beispielsweise einen QoS Wert repräsentieren, der an dieser Stelle von zumindest einem der verschiedenen Funksignale oder einer Kombination aus den beiden verschiedenen Funksignale erzielt wird. Ist das funkfähige Gerät beispielsweise mulit-path fähig, wie beispielsweise bei einem sogenannten hybrid-access Szenario, können die beiden verschiedenen Funksignale zeitlich gemeinsam genutzt werden, um einen höheren QoS Wert zu erzielen. Selbst wenn jeweils nur eines der beiden verschiedenen Funksignale zu einem Zeitpunkt genutzt werden kann, ist der berechnete Wert der Güte immer höher, wenn zu dem QoS Wert des ersten Funksignals der QoS Wert des zweiten Funksignals hinzukommt, da das zweite Funksignal immer zumindest eine gewisse Redundanz bereitstellen kann, falls das erste Funksignal ausfällt.
   ∘ Es können verschiedene Kriterien aufgestellt werden, um den Score zu berechnen. Insbesondere kann dies beispielsweise durch festlegbare Gewichtungsfaktoren durchgeführt werden.
      ▪ Beispielsweise kann festgelegt werden, dass das erste Funksignal für den Nutzer eine höhere Relevanz hat als das zweite Funksignal. Dementsprechend kann der Gewichtungsfaktor w₁ für das erste Funksignal höher gewählt werden als der Gewichtungsfaktor w₂ für das zweite Funksignal, also w₁> w₂. Die Formel für den ersten Score könnte dann lauten S₁ = w₁*F_{1,i} + w₂ * F_{2,i}, wobei der Wert für S₁ noch entsprechend normiert werden kann, sodass dieser zwischen 0 und 1 liegt.
      ▪ weitere mögliche Kriterien sind, dass sowohl für das erste und/oder für das zweite Funksignal Mindestwerte für die Upload und/oder Downloadgeschwindigkeiten und/oder andere QoS Parameter festgelegt werden. Werden diese von einem der Funksignale nicht erfüllt, können entsprechende Gewichtungsfaktor als w = 0 gewählt werden. Ist beispielsweise das erste Funksignal das WLAN Signal mit dem der Nutzer typischerweise Downloads tätig, Aktualisierungen durchführt und ist das zweite Funksignal ein Mobilfunksignal, das lediglich für "Notfallanrufe" o. ä. dienen soll, können die Mindestwerte für die Upload und/oder Downloadgeschwindigkeit des ersten Funksignals entsprechend höher gewählt werden als die für das zweite Funksignal.
   ∘ der Positionierungs-Algorithmus, der insbesondere auf einem Prozessor des Funksignalstärke-Test-Geräts implementierbar ist, berechnet also automatisiert den ersten Score bezüglich der verschiedenen jeweiligen Positionen an denen die Messungen vorgenommen wurden;
   ∘ bei der Ausgabe von mehreren Positionen kann zuvor festgelegt werden, um wie weit der erste Score an der jeweiligen Stelle von dem bestmöglichen Score abweichen darf, damit diese Position ebenfalls ausgegeben wird.

Dabei vergleicht der Positionierungs-Algorithmus die Messwerte und die ersten Scores und generiert eine Ausgabe mit einer ausgewählten Position zur Positionierung eines funkfähigen Gerätes anhand eines weiteren festlegbaren Kriteriums. Die Ausgabe wird an ein Signalisierungsmittel mittel des Funksignalstärke-Test-Geräts übergeben.

Das Verfahren bietet also den Vorteil, dass durch technische Mittel ein erster Score berechnet werden kann, der angibt wie "gut" ein Funkempfang an einer bestimmten Position in einer Umgebung ist, wenn sich der Funkempfang aus zwei verschiedenen Funksignale zusammensetzt, wobei beide Funksignale von einem funkfähigen Gerät - wenn auch nicht unbedingt zeitgleich - genutzt werden können. Das festlegbar Kriterium ermöglicht es vorteilhaft, dass nutzer-individuell unterschiedliche Scores an den jeweiligen Positionen berechnet werden können, die den Bedürfnissen der Nutzer bestmöglich Rechnung tragen. Bei dem funkfähigen Gerät kann sich beispielsweise um einen mobilfunkfähigen WiFi Repeater, ein Computer, ein WLAN Router, ein Smartphone und/oder einen intelligenten Lautsprecher etc. handeln; das funkfähige Gerät kann als Empfangs-und oder Sendeeinheit für Funksignale ausgebildet sein; Insbesondere kann das Funksignalstärke-Test-Gerät auch das funkfähige Gerät sein;

Bevorzugt wählt das Funksignalstärke-Test-Gerät, insbesondere der Positionierungs-Algorithmus, die Position mit dem höchsten Score aus und signalisiert diese ausgewählte Position. Nach der entsprechenden Signalisierung wird das funkfähige Gerät an der ausgewählten Position positioniert.

Vorteilhaft wird hierdurch ermöglicht, dass der Nutzer über die Position mit dem bestmöglichen Score informiert wird und sein funkfähiges Gerät genau an dieser Stelle positionieren kann. Durch diese Mensch-Maschinen-Interaktion wird der Nutzer zielgerichtet so angeleitet, dass er das funkfähige Gerät erfolgreich an einer Position mit gutem Empfang positioniert.

Bevorzugt sind die zwei verschiedenen Funksignale zwei verschiedene W-LAN Funksignale unterschiedlicher Sendequellen oder ein W-LAN Funksignal und ein Mobilfunksignal unterschiedlicher Sendequellen.

Heutzutage findet auch das Konzept des W-LAN Sharings Anwendung, dies bedeutet, dass ein Nutzer sein Netzwerk auch zur Nutzung für Gäste, insbesondere für wohl definierte Nutzungsszenarien, freigeben kann.

Deswegen kann beispielsweise ein Repeater oder ein Router des Nutzers in einem Haus Funksignale eines solchen fremden W-LAN Netzwerks empfangen, das ebenfalls genutzt werden kann. Für solche Fälle können also die zwei verschiedenen Funksignale zwei verschiedene W-LAN Funksignale sein. Der Router oder der Repeater können aber auch eingestellt sein, sowohl ein W-LAN Funksignale als auch ein Mobilfunksignal zu verwenden. Gegebenenfalls soll das Mobilfunksignal nur verwendet werden, wenn das W-LAN Funksignal ausfällt oder Performance Probleme aufweist. Vorteilhaft wird auf diese Art und Weise also eine Flexibilität bereitgestellt, die es dem Nutzer ermöglicht variabel vorhandene Funksignale verschiedener Art auszumessen und gemeinsam zu nutzen.

Vorzugsweise werden als zusätzliche Parameter an den jeweiligen verschiedenen Positionen der Umgebung folgende Messwerte aufgezeichnet:
- Identität des Mobilfunknetzes,
   o diese Identität stellt die Information bereit, wer der Provider des Mobilfunknetzes ist;
   o insbesondere kann dies dahingehend berücksichtigt werden, dass nur die Mobilfunksignale eines Providers ausgemessen werden, mit dem der Nutzer ein Vertrag abgeschlossen. Hieraus folgt vorteilhaft, dass aus der Menge an vorhandenen Funksignale nur diejenigen Mobilfunksignal ausgewählt werden, die genutzt werden können.
- Identität des W-LAN Netzes;
   ∘ diese Identität stellt die Information bereit, wer der Provider des W-LAN Netzes ist;
   ∘ insbesondere kann dies dahingehend berücksichtigt werden, dass nur die W-LAN Funksignale zu denen der Nutzer Zugriff hat. Hieraus folgt vorteilhaft, dass aus der Menge an vorhandenen W-LAN Funksignale nur diejenigen ausgewählt werden, die genutzt werden können.
- Nutzungsparameter;
   ∘ je nachdem wie der Nutzer die verschiedenen Funksignale benutzt können verschiedene Modelle zur Berechnung des Scores verwendet werden, um für den Nutzer einen optimalen Score berechnen zu können.

In einer bevorzugten Ausführungsform der Erfindung berücksichtigt der Positionierungs-Algorithmus bei der Berechnung des Scores ein Anfordernungsprofil, wobei das Anfordernungsprofil Anforderungen des Nutzers an die jeweiligen verschiedenen Funksignale auflistet. Wie vorstehend schon beschrieben, kann das Anforderungsprofil beispielsweise Mindestwerte für bestimmte QoS Parameter auflisten, die die verschiedenen Funksignale bereitstellen soll. In dem der Nutzer dieses Anforderungsprofil selbst erstellen kann, beispielsweise über eine entsprechende App, kann der Score vorteilhaft besonders gut für die Nutzungsszenarien des Nutzers berechnet werden. Diese Art und Weise kann der Nutzer auch flexibel sein Anforderungsprofil bearbeiten und ändern. Sind die vorgenannten Messungen in diesem Fall immer noch in dem Funksignalstärke-Test-Geräts vorgehalten, kann der Algorithmus, ohne dass der Nutzer eine nochmalige Messung durchführen muss, eine neue Position mit dem bestmöglichen neu berechneten Score signalisieren. Eine solche neue Position kann auch vorgeschlagen werden, wenn der Algorithmus feststellt, dass ich das Nutzungsverhalten des Nutzers geändert hat. Dies kann beispielsweise dann der Fall sein, wenn der Nutzer vermehrt Downloads über sein Mobilfunksignal durchführt.

In einer Ausführungsform der Erfindung geht es nun darum, dass dem Nutzer möglichst komfortabel diejenige Position bekannt gemacht wird, an welcher der Nutzer das funkfähige Gerät aufstellen kann. Hierzu können zur Positionierung des funkfähigen Gerätes in der Umgebung zusätzlich die folgenden Schritte ausgeführt werden:
- Einrichten des Erfassungsmittels des Funksignalstärke-Test-Geräts, sodass das Erfassungsmittel zusätzlich zu den Funksignalstärken für Bilder und/oder eine räumliche Lage des Funksignalstärke-Test-Geräts erfassen kann;
   ∘ die Erfassungsmittel erfassen also entweder Funksignalstärken und Bilder, Funksignalstärken und eine räumliche Position des Funksignalstärke-Test-Geräts, oder Funksignalstärken und Bilder und eine räumliche Position des Funksignalstärke-Test-Geräts; die Erfassungsmittel des Funksignalstärke-Test-Geräts weisen also zumindest eine Antenne zum Erfassen der Funksignalstärke auf, Bewegungssensoren zum Erfassen der räumlichen Position und/oder eine Kamera zum Anfertigen der Bilder, bei den Bildern handelt es sich also um Bilder der Umgebung, die bevorzugt von dem Funksignalstärke-Test-Gerät selbst erzeugt werden;
- Aufzeichnen der entsprechenden Funksignalstärken der zumindest zwei Funksignale, eines entsprechenden Bildes und/oder der entsprechenden räumlichen Lage des Funksignalstärke-Test-Geräts an den jeweiligen verschiedenen Positionen der Umgebung als zusätzliche Messwerte mittels des Funksignalstärke-Test-Geräts;
   ∘ die Messwerte können also zu einem Vektor zusammengefasst werden, der zumindest folgende Werte aufweisen kann (F_{1,i}, F_{2,i}, Li), (F_{1,i}, F_{2,i}, Bᵢ), und/oder (F_{1,i}, F_{2,i}, Lᵢ, Bᵢ). Hierbei steht F für die Feldstärke, L für die Lage und B für das Bild an der jeweiligen Position i;
- Bezüglich der Übergabe der Messwerte an den Positionierungs-Algorithmus ist zu sagen;
   ∘ der Positionierungs-Algorithmus, wählt also automatisiert eine Position zur Positionierung des funkfähigen Gerätes, insbesondere nach festlegbaren weiteren Kriterien aus. Ein mögliches festlegbares weiteres Kriterium ist, die Position auszuwählen, die dem bestmöglichen ersten Score, also dem mit der besten Signalstärke, entspricht. Das weitere Kriterium kann dem ersten Kriterium entsprechen, aber auch optional weitere Parameter berücksichtigen. Das weitere Kriterium beispielsweise zusätzlich, wie nachstehend noch erläutert wird, die Geeignetheit der Position zur Positionierung des funkfähigen Geräte berücksichtigen. Der Algorithmus kann auch mehrere Positionen ausgeben. In diesem Fall kann der Nutzer eine der mehreren Positionen auswählen, wo er das funkfähige Gerät aufstellen möchte, da in der Regel nicht alle Position gleich gut zum Aufstellen des funkfähigen Geräts geeignet sind;
   ∘ die Signalisierungsmittel können eingerichtet sein, um Audiosignale, haptische Signale und/oder visuelle Signale zu erzeugen; bei den Signalisierungsmitteln handelt es sich insbesondere um Anzeigemittel wie beispielsweise ein Display, welches insbesondere zum Anzeigen von Bildern geeignet ist;
- Signalisieren der ausgewählten Position zur Positionierung des funkfähigen Gerätes mittels des Signalisierungsmittels des Funksignalstärke-Test-Geräts.

Dies bietet den Vorteil, dass der Nutzer aktive Hilfe von seinem Funksignalstärke-Test-Gerät bei der Auswahl der richtigen Positionen des funkfähigen Geräts bekommt. Der Nutzer muss demnach nicht mehr, wie es gegenwärtig der Fall ist, durch eine Umgebung, insbesondere seine Wohnung, laufen und permanent die Signalstärke auf dem Display seines Smartphones beachten, um dann eigenständig die Entscheidung zu treffen, welche Position der geeignete Standort ist - was zum einen sehr mühsam ist und zum anderen die Gefahr birgt, dass die besseren Standorte schlichtweg vergessen werden. Das Verfahren wählt vorteilhaft erfindungsgemäß für den Nutzer eine Position basierend auf festlegbaren Kriterien automatisiert aus.

Zweckmäßigerweise wird bei dem Aufzeichnen der Messwerte auch jeweils der entsprechende Zeitstempel aufgezeichnet und mit den Messwerten verknüpft. In diesem Fall können die entsprechenden Vektoren also wie folgt beschrieben werden: (F_{1,i}, F_{2,i}, Lᵢ, Tᵢ), (F_{1,i}, F_{2,i}, Bᵢ, Tᵢ), und/oder (F_{1,i}, F_{2,i}, Lᵢ, Bᵢ, Tᵢ). Hierbei ist Tᵢ der Zeitstempel an der Position i. Hierdurch wird beispielsweise auch ermöglicht, dass bei einem mehrmaligen Abscannen Fluktuationen an einer bestimmten Position ermittelt werden können.

Zudem ist durch den Zeitstempel die Bewegungsbahn rekonstruierbar mit der sich das Funksignalstärke-Test-Gerät, insbesondere dreidimensional, durch die Umgebung bewegt hat. Weisen die Vektoren zudem noch Daten von Bewegungssensor, wie beispielsweise Daten von Beschleunigungssensoren auf, des Funksignalstärke-Test-Gerät ist es auch zu jedem Zeitpunkt möglich die Orientierung und/oder die Ausrichtung des Funksignalstärke-Test-Geräts zu bestimmen.

Vorzugsweise wird die Lage des Funksignalstärke-Test-Geräts mittels GPS-Information, W-LAN und/oder Bewegungssensoren erfasst.

Prinzipiell gilt, dass eine Kombination von verschiedenen Daten bezüglich der Lage des Funksignalstärke-Test-Geräts bessere Ergebnisse liefert als lediglich Daten eines einzigen Typs. Hinzu kommt, dass je nachdem, ob sich die Umgebung im Freien oder innerhalb eines Raums befindet, manche Sensordaten besser geeignet sind als andere. Befindet sich die Umgebung beispielsweise im Freien, variieren zum einen die Signalstärken generell nicht so stark wie in geschlossenen Räumen und auch die GPS Koordinaten können genauer bestimmt werden. Soll also eine Position mit guter Signalstärke im Freien für das funkfähige Gerät aufgefunden werden, eignen sich insbesondere GPS Koordinaten als Input für den Positionierungs-Algorithmus. Innerhalb von geschlossenen Räumen reicht allerdings die Auflösung von GPS Koordinaten in der Regel nicht aus, um die entsprechenden Positionen mit einer ausreichenden Auflösung bestimmen zu können. Der sogenannte WLAN-Standard "Wi-Fi 802.11mc ist geeignet und kann verwendet werden, um die dreidimensionale Position im Raum des Funksignalstärke-Test-Geräts zu bestimmen. Die Bewegungssensoren sind insbesondere geeignet, die Orientierung des Funksignalstärke-Test-Geräts bestimmen zu können und zu berechnen wie sich das Funksignalstärke-Test-Gerät von einer Position starten zu einer anderen Position relativ bewegt hat.

Bevorzugt berücksichtigt der Positionierungs-Algorithmus bei der ausgewählten Position deren Geeignetheit zur Positionierung eines funkfähigen Gerätes.

Dies hat den Vorteil, dass dem User solche Positionen zur Positionierung des funkfähigen Geräts signalisiert bzw. angezeigt werden, auf den das funkfähige Gerät beispielsweise einfach abgestellt werden kann. Selbst wenn irgendwo mitten im Raum der erste Score am besten ist, ist eine solche Stelle mitten im Raum, beispielsweise 30 cm unter der Decke, in der Regel nicht gut geeignet, um das funkfähige Gerät dort pragmatisch platzieren zu können. Der Positionierungs-Algorithmus kann also beispielsweise einen weiteren Score errechnen der sich zusammensetzt aus dem ersten Score und der Geeignetheit der jeweiligen Position zur Positionierung des funkfähigen Geräts. Hierbei können die einzelnen Parameter, insbesondere auch nach Nutzervorgaben, gewichtet werden. Beispielsweise könnte ein solcher weiterer Score wie folgt berechnet werden "weiterer Score" = w_{F}*Sᵢ/2 + w_{P}*Gᵢ/2, wobei Sᵢ der erste Score an der Position i in einer Skala von 1-100 und Gi die Geeignetheit der Position i in einer Skala von 1-100 und w_{F,P} < 1 die entsprechenden Bestimmungsfaktoren darstellen. Auf diese Weise wird also der weitere Score von 0-100 berechnet, der einen guten Kompromiss aus der Geeignetheit der Position und der Qualität der Feldstärke wiedergibt. Der Nutzer kann beispielsweise spezifizieren, ab welchem Wert des weiteren Scores ihm eine entsprechende Position angezeigt wird.

Kriterien für eine Geeignetheit können dem Positionierungs-Algorithmus, insbesondere, wenn dieser als eine künstliche Intelligenz in der Form eines neuronalen Netzwerks ausgebildet ist, mit entsprechenden Inputdaten, was nachstehend noch erläutert wird, antrainiert werden.

Kriterien für eine Geeignetheit können beispielsweise sein:
i) dass die Feldstärke im Bereich der entsprechenden Position bei leichter Abweichung dieser Position nur wenig variiert. Dies ist deshalb wichtig, da der Nutzer das funkfähige Gerät, aus welchen Gründen auch immer, leicht verrücken kann und es dann nachteilig wäre, wenn durch dieses leichte verrücken ein deutlich schlechterer Empfang der Funksignale resultieren würde. Eine solche Situation kann insbesondere dann auftreten, wenn sich die Position in der Nähe von Kanten, Säulen und Wänden befindet. Stellt der Algorithmus bei der Auswertung der Feldstärken an einer jeweiligen Position also fest, dass diese zwar eine gute Signalstärke aufweist, benachbart aber eine schlechtere Signalstärke, beispielsweise 5 % schlechter bei einer Entfernung von 5 cm, vorliegt, wird der ehemaligen Position trotz ihrer guten Signalstärke ein niedriger Wert der Geeignetheit G_{S}, beispielsweise G_{S} = 50, zugewiesen. G_{S} steht hierbei für die Geeignetheit in Bezug auf die Signalstärke.
ii) dass das funkfähige Gerät komfortabel an einer jeweiligen Position abgestellt werden kann. Eine Stelle mitten im Raum, beispielsweise 30 cm unter der Decke, wird sich in der Regel schlechter zum Abstellen des funkfähigen Geräts eignen als eine ebene horizontale Fläche, beispielsweise in der Form eines Tisches oder eine Ablagefläche auf einen Schrank. Dementsprechend würde dem Tisch oder anderen ebenen Flächen ein hoher Wert der Geeignetheit G_{L}, beispielsweise G_{L} = 100, zugewiesen werden. G_{L} steht hierbei für die Geeignetheit in Bezug auf die Lage.

Da die vorstehend beschriebenen Fälle i) und ii) in der Regel zugleich auftreten, setzt sich G funktional aus G_{L} und Gs zusammen: G = G (G_{L}, G_{S}).

In einer Ausführungsform wird die ausgewählte Position durch ein Bild der gemachten Aufnahmen dargestellt, als eine Markierung in einer erzeugten Karte der Umgebung dargestellt wird und/oder als eine Navigationsanweisung für den Nutzer wiedergegeben wird.

Ist die ausgewählte Position beispielsweise auf einen Tisch, so kann dem Nutzer auf dem Display des Funksignalstärke-Test-Gerät einfach dieser Tisch angezeigt werden von dem zuvor beim Scannen der Feldstärke in Umgebung ein Bild aufgenommen wurde. Der Nutzer weiß sofort, dass er sein funkfähiges Gerät auf diesem Tisch platzieren kann, um eine gute Signalstärke zu erhalten. Dies soll an einem einfachen Beispiel erläutert werden: die Kamera des Funksignalstärke-Test-Geräts macht eine Aufnahme an der Position P1, wobei auf dem Bild beispielsweise ein Tisch und ein Hintergrund zu sehen sind und wobei die Signalstärke an der Position P1 aufgezeichnet wird. Das Funksignalstärke-Test-Gerät wird von dem Nutzer bis zu der Position P2 näher an den Tisch herangebracht, wobei an der Position P2 ein weiteres Bild des Tisches und des Hintergrunds erstellt wird und wobei die Signalstärke an der Position P2 gemessen wird. Durch den Vergleich der Bilder an den Positionen P1 und P2 kann ermittelt werden, dass sich die Lage des Funksignalstärke-Test-Geräts relativ näher an dem Tisch befindet, da dieser auf dem Bild an der Position P2 relativ größer dargestellt ist als an der Position P1. Ist nun die Signalstärke an der Position P2 größer eine Position P1, so gibt der Algorithmus zur Positionierung des funkfähigen Geräts die Position P2 aus, die näher an dem Tisch ist. Wird ein drittes Bild an einer Position P3 auf dem Tisch gemacht (wobei auf dem Bild an der Position P3 zumindest der Hintergrund und/oder abschnittsweise auch der Tisch zu sehen sein kann), kann insbesondere durch Bilderkennungs-Routinen, durch den Vergleich mit den anderen Bildern an den Position P1 und P2 ermittelt werden, dass sich das Funksignalstärke-Test-Geräts nun auf dem Tisch befindet. Weist die Position P3 zudem die stärkste Signalstärke auf, kann der Algorithmus zur Positionierung des funkfähigen Geräts die Position des Tisches P3 ausgeben. Zur besseren Bestimmung der Position können insbesondere die vorstehend beschriebenen erfassten Daten im Zusammenhang mit der räumlichen Lage zusätzlich verwendet werden.

In einer anderen Ausführungsform kann die Variante, bei der ein Bild der Position angezeigt wird, auch wie folgt ausgestaltet sein: es kann während des gesamten Messvorgangs eine Videoaufnahme erstellt werden. Dabei wird der gesamte "Weg" beim Messen von Signalstärken per Video aufgenommen. Die Signalstärken werden während des gesamten Messvorgangs inklusive des zugehörigen Zeitstempels aufgezeichnet. Nach Beenden des Ablaufens der Umgebung und damit des Messvorgangs, berechnet der Algorithmus zu welchem Zeitpunkt des Messvorgangs die beste Signalstärke vorlag, sucht diesen Zeitstempel im aufgenommenen Video heraus und fertigt ein Bild davon an und zeigt dies dem Nutzer. Der Nutzer sieht das Bild, erkennt wo dieses Bild im Raum bzw. in der Wohnunglim Haus aufgenommen wurde und platziert das funkfähige Gerät genau dort. Aus der bisherigen Vorgehensweise die einer "Schatzsuche" gleicht, wird hierdurch ein strukturierter nutzerzentrischer Prozess, der eine erheblich höhere Wahrscheinlichkeit aufweist, den optimalen Aufstellort für das funkfähige Gerät zu identifizieren.

In einer bevorzugten Ausführungsform zeigt das Funksignalstärke-Test-Gerät dem Nutzer auf seinem Display einen hervorgehobenen Gegenstand, der zu Positionierung geeignet ist, an.

Das hervorgehobene Anzeigen ist dahingehend zu verstehen, dass, wenn auf dem angezeigten Bild mehrere Gegenstände, Tische oder dergleichen zu sehen sind, derjenige hervorgehoben dargestellt wird (beispielsweise blinkend oder durch einen Pfeil markiert), der durch den Algorithmus zur Positionierung des funkfähigen Geräts ausgewählt wurde. Dies bietet den Vorteil, dass der Nutzer auch dann den ausgewählten Gegenstand auf dem angezeigten Bild richtig erkennt, wenn auf diesem Bild mehrere Gegenstände gezeigt sind, die prinzipiell zur Positionierung des funkfähigen Gerätes aufgrund ihrer Lage oder Beschaffenheit geeignet sein können.

In einer Ausführungsform umfasst der Positionierungs-Algorithmus eine künstliche Intelligenz zum Erkennen der geeigneten Gegenstände.

Dies bietet den Vorteil, dass der Algorithmus zuverlässig unterscheiden kann, welche Gegenstände in einer Umgebung, also beispielsweise ein Tisch oder ein Schrank, zur Positionierung des funkfähigen Geräts geeignet sind. Eine künstliche Intelligenz ist hierfür aufgrund ihrer Mustererkennungseigenschaften besonders gut geeignet. Die künstliche Intelligenz kann beispielsweise im Vorfeld trainiert werden, geeignete Positionen zur Positionierung des funkfähigen Geräts, von solchen die ungeeignet sind, zu unterscheiden. Beispielsweise können der künstlichen Intelligenz hierfür Bilder von Tischen, Schränken mit horizontalen Flächen als Input übergeben und als geeignet zur Positionierung markiert werden. Weitere Inputdaten können durch solche Gegenstände ausgebildet werden, die zur Positionierung ungeeignet sind, wie beispielsweise eine Lampe an der Decke, und als ungeeignet markiert werden. Auf diese Art und Weise wird das neuronale Netzwerk der künstlichen Intelligenz trainiert und kann geeignete von ungeeigneten Gegenständen voneinander unterscheiden und diesen gegebenenfalls einen entsprechenden Score der Geeignetheit G_{L} zuweisen, der ebenfalls in der Trainingsphase bekannt gemacht werden kann.

Zweckmäßigerweise kann das dargestellte Bild von dem in der ausgewählten Position erstellten Bild abweichen, wobei das abweichende dargestellte Bild insbesondere unter Berücksichtigung der Zeitstempel extrapoliert wird.

Es kann der Fall sein, dass das Bild, dass an einer Position mit sehr guter Funkstärke gemacht wurde nicht den Gegenstand zeigt, auf dem das funkfähige Gerät abgestellt werden kann. So kann es vorkommen, dass das Bild an dieser Position auf einem Tisch gemacht wurde, der sich besonders gut zur Positionierung des funkfähigen Geräts eignet, dass dieser Tisch auf dem Foto an dieser Stelle aber nicht zu sehen ist. Durch die Extrapolation, kann berechnet werden, wie sich das Funksignalstärke-Test-Geräts im Raum zu oder von dieser Stelle wegbewegt hat. Demnach kann der Algorithmus ein Bild ermitteln, auf dem diese Stelle, insbesondere aus einer gewissen Entfernung, zu sehen ist. Dieses Bild wird als das abweichende dargestellte Bild bezeichnet. Auf diesem abweichenden Bild kann nun beispielsweise der Tisch wieder zu sehen sein, sodass dem Nutzer angezeigt werden kann, dass die ausgewählte Position zur Positionierung des funkfähigen Geräts der Tisch ist.

Die erzeugte Karte kann dem Nutzer als eine Heat-Map dargestellt werden. Insbesondere kann diese Heat-Map eine dreidimensionale Heat-Map sein, sodass der Nutzer vorteilhaft leicht erkennen kann in welchen Bereichen der Umgebung für ihn zufriedenstellende Signalstärken vorhanden sind. Bevorzugt kann der Nutzer vorher festlegen, welche Signalstärken er zumindest angezeigt haben möchte, sodass die Informationen auf der Heat-Map vorteilhaft auf die für ihn wesentlichen reduziert werden.

In einer bevorzugten Ausführungsform berücksichtigt der Positionierungs-Algorithmus bei der Ermittlung der ausgewählten Position Zielparameter der Funksignalstärken.

Dies bietet den Vorteil, dass effektiv nur solche Positionen ausgewählt werden, die bestimmte Zielparameter, die vom Nutzer an den Positionierungs-Algorithmus über ein Eingabemittel des Funksignalstärke-Test-Geräts übergeben werden kann, berücksichtigt werden. Dies führt zum einen zu einer effektiven Datenreduktion, da die Messwerte, die nicht den Zielparametern entsprechen verworfen werden können und zudem zu einer gesteigerten Übersichtlichkeit der Signalisierung der ausgewählten Position.

Die Zielparameter können umfassen:
- zumindest ein funkfähiges Zielnetzwerk oder zwei verschiedene Zielnetzwerke,
   ∘ gerade in dicht besiedelten Gebieten gibt es kaum noch eine Umgebung, in der lediglich ein einziges Funknetzwerk angezeigt wird. Zumeist existieren an einer Position im Raum Signale von verschiedenen Funknetzwerken mit ihren entsprechenden Signalstärken. Für den Nutzer ist es allerdings wenig hilfreich, und es werden zudem unnötige Messwerte erhoben und Auswertungen vorgenommen, wenn die Signalstärke von Funknetzwerken analysiert wird, zu denen der Nutzer überhaupt keinen Zugang hat. Dementsprechend können Nutzer über ein Eingabemittel zumindest ein bestimmtes funkfähiges Zielnetzwerk markieren, sodass die Messwerte lediglich für dieses festgelegte erhoben und die Auswertung nur für dieses Zielnetzwerk ausgeführt wird. Der Nutzer hat allerdings auch die Möglichkeit zumindest zwei funkfähige Zielnetzwerke zu markieren, da funkfähige Geräte zunehmend Multi-Path-fähig sind und deshalb Daten von mehreren Funknetzwerken gleichzeitig nutzen können. Beispielsweise kann das erste markierte Zielnetzwerk ein Mobilfunknetz und das zweite markierte Zielnetzwerk ein WLAN Netzwerk sein.
- Geeignetheit zur Positionierung, und/oder
   ∘ der Nutzer kann spezifizieren, welche Voraussetzungen eine Geeignetheit zur Positionierung zu erfüllen hat. Beispielsweise, dass eine ebene horizontale Fläche an den ausgewählten Positionen vorhanden sein soll;
- QoS-Zielwerte.
   ∘ QoS Zielwerte können beispielsweise eine Bandbreite, eine Latency, Signalstärken und/oder andere Parameter sein, die die Performance des Funksignals charakterisieren, Hat beispielsweise ein gewisser Service eine Mindestanforderung an solche QoS Zielwerte, werden durch die entsprechende Bekanntmachung lediglich Position ausgewählt, die diese QoS Zielwerte erfüllen.

Bevorzugt signalisiert der Positionierungs-Algorithmus, wenn an einer Position die QoS-Zielwerte erreicht werden.

Dies bietet den Vorteil, dass der Nutzer seine Suche nach geeigneten Positionen bezüglich der Signalstärke an dieser Stelle zeitsparend abbrechen kann, und nicht mehr die gesamte Umgebung scannen muss, bevor der Positionierungs-Algorithmus seine Auswertung vornimmt und die ausgewählten Positionen ausgibt. Da der Nutzer die QoS-Zielwerte selbst festlegen kann, kann dennoch sichergestellt werden, dass an dieser Position für den Nutzer zufriedenstellende Voraussetzungen bezüglich der Signalstärken gewährleistet sind.

Gemäß einem zweiten Aspekt der Erfindung ist ein Funksignalstärke-Test-Gerät angegeben, das zur Ausführung des vorgenannten Verfahrens eingerichtet ist umfassend
- Erfassungsmittel eingerichtet zum Erfassen von Funksignalstärken und optional eingerichtet zum Erfassen von Bildern und/oder einer räumliche Lage des Funksignalstärke-Test-Geräts an verschiedenen räumlichen Positionen;
   ∘ Das Funksignalstärke-Test-Gerät ist insbesondere mobil und kann insbesondere ein Smartphone und/oder Tablet auf dem der vorstehend beschriebene Positionierungs-Algorithmus implementierbar ist; die Erfassungsmittel können Antennen, Kameras und oder Bewegungssensor sein, die beispielsweise schon standardmäßig auf Smartphones oder Tablets vorhanden sind;
- Speichermittel eingerichtet zum Aufzeichnen der entsprechenden Funksignalstärken und eines entsprechenden Bildes und/oder der entsprechenden räumlichen Lage des Funksignalstärke-Test-Geräts an den jeweiligen verschiedenen Positionen der Umgebung als Messwerte;
   ∘ auch solche Speichermittel sind standardmäßig auf Smartphones oder Tablets vorhanden;
- Prozessor auf dem ein Positionierungs-Algorithmus implementiert ist;
   ∘ ein solcher Prozessor ist ebenfalls standardmäßig auf Smartphones oder Tablets vorhanden. Der in diese Anmeldung erstmals vorgestellte Positionierungs-Algorithmus kann auf ein Smartphone oder ein Tablet geladen und ausgeführt werden, insbesondere in der Verwirklichung als App.
- Signalisierungsmittel eingerichtet zum Signalisieren der ausgewählten Position zur Positionierung des funkfähigen Gerätes.
   ∘ Bei den Signalisierungsmitteln kann es sich um Anzeigenmittel, wie ein Display oder ein LED handeln, aber auch um Lautsprecher, die Audiosignale wiedergeben oder um Haptikmodule, die als Feedback Vibrationen erzeugen.

In einer bevorzugten Ausgestaltung ist das Funksignalstärke-Test-Gerät als das funkfähige Gerät ausgebildet.

Das hat den Vorteil, dass der Nutzer nicht extra ein Funksignalstärke-Test-Gerät kaufen muss, sondern sein funkfähiges Gerät, welches er sowieso einsetzen will, verwenden kann. Hierfür kann das funkfähige Gerät ein Betriebssystem bereitstellen auf dem das erfindungsgemäße Verfahren als App installiert werden kann.

Zweckmäßigerweise weist das Funksignalstärke-Test-Gerät ein Feedbackmodul auf, das eine korrekte Scangeschwindigkeit der Funksignalstärke, insbesondere durch einen Nutzer, signalisiert. Beispielsweise kann das Feedbackmodul durch vibrieren oder ein akustisches Signal anzeigen, dass der Nutzer seine Scangeschwindigkeit verlangsamen soll.

Hierdurch wird vorteilhaft sichergestellt, dass der Nutzer nicht zu schnell mit seinem Funksignalstärke-Test-Gerät die Umgebung scannt und die Messwerte dementsprechend nicht verlässlich erhoben werden können. Der Nutzer kann ebenfalls informiert werden, wenn er seine Scangeschwindigkeit erhöhen kann, sodass er für den Vorgang nicht unnötig lang benötigt. Bevorzugt unterscheidet sich das Feedback für das zu langsame Scannen und das zu schnelle Scannen voneinander, sodass der Nutzer weiß, ob er schneller oder langsamer scannen kann bzw. darf.

Im Folgenden werden bevorzugte Ausführungsbeispiele der vorliegenden Erfindung unter Bezugnahme auf die begleitenden Figuren erläutert:
- Fig. 1a:: zeigt eine Umgebung mit zwei verschiedenen Funksignalen an verschieden Positionen;
- Fig. 1b:: zeigt schematisch einen Ausschnitt der Umgebung aus Fig. 1a mit verschiedenen ersten Scores;
- Fig. 2a:: zeigt ein erstes erfindungsgemäßes Verfahren zur Positionierung eines funkfähigen Gerätes;
- Fig. 2b:: zeigt ein zweites erfindungsgemäßes Verfahren zur Positionierung des funkfähigen Gerätes;
- Fig. 3a:: zeigt schematisch ein Smartphone eingerichtet zur Ausführung der erfindungsgemäßen Verfahren nach Fig. 2a und Fig. 2b;
- Fig. 3b:: zeigt die Darstellung einer ausgewählten Position zur Positionierung des funkfähigen Geräts auf dem Smartphone.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

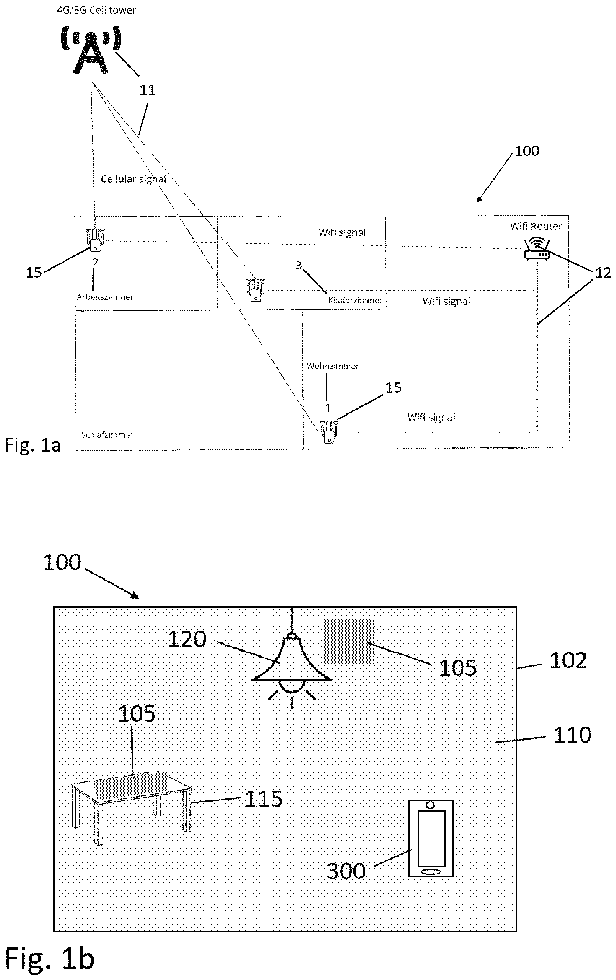

Fig. 1a zeigt eine Umgebung 100 mit zwei verschiedenen Funksignalen an verschieden Positionen, insbesondere in verschiedenen Zimmern.

Fig. 1a illustriert das erfindungsgemäße Verfahren für eine optimale Platzierung eines funkfähigen Gerätes 15, insbesondere eines mobilfunkfähigen Wifi-Mesh Repeaters 15. In der Umgebung 100 wird eine Kommunikationsverbindung durch zwei verschiedene Funksignale, nämlich ein Mobilfunksignal 11 und ein WiFi Signal 12 an den verschiedenen Positionen der Umgebung 100 bereitgestellt. Diese beiden verschiedenen Funksignale 11, 12 haben an den verschiedenen Positionen der Umgebung 10 in der Regel verschiedenartige Funkstärken, sodass es für einen Nutzer gegenwärtig sehr schwer ist eine optimale Position innerhalb der Umgebung zehn zu finden in der er beide Funksignale 11, 12 für sich optimal ausnutzen kann, indem er beispielsweise den Wifi-Mesh Repeaters 15 an der entsprechenden Stelle positioniert.

Beispielsweise können folgende Funkstärken vorhanden sein: In dem Wohnzimmer 1 beträgt die WiFi Führungsstärke -50 dBm und die Mobilfunkstärke -70 dBm. In dem Arbeitszimmer beträgt die WiFi Führungsstärke -60 dBm und die Mobilfunkstärke -50 dBm. In dem Kinderzimmer beträgt die WiFi Führungsstärke -55 dBm und die Mobilfunkstärke -53 dBm.

Um den optimalen Standort für den Wifi Mesh Repeater 15 mit Mobilfunk-Failover-Fähigkeit in einem Haus oder Büro zu bestimmen, muss der Benutzer also den Ort in der Umgebung 100 mit dem besten Kompromiss aus Mobilfunk- und WLAN-Abdeckung finden, um die Up- und Download-Raten für alle Geräte unter Berücksichtigung der Signalstärke für beide Funktechnologien, sowohl für WLAN als auch für Mobilfunk (4G/5G), zu optimieren.

Hierfür kann die Umgebung 100 in einem ersten Schritt mit einem Funksignalstärke-Test-Gerät 300 im Hinblick auf die Funksignalstärke der beiden verschiedenen Funksignale 11, 12 ausgemessen werden, wobei ein Positionierungs-Algorithmus basierend auf diesen Messwerten und einem ersten Kriterium die beste Platzierung für den Repeater 15 berechnet. Hierzu kann der Positionierungs-Algorithmus einen ersten Score berechnen und mittels des Funksignalstärke-Test-Geräts 300 bekannt machen, der es dem Benutzer ermöglicht, die beste Platz Positionierung für das Gerät zu finden, indem beispielsweise festgelegt ist, dass je höher der Wert des Scores ist, desto besser ist die entsprechende Positionierung geeignet. Es wird also ein ortsaufgelöster Score für die verschiedenen Positionierungen berechnet.

Der erste Score kann für die Berechnung folgende Parameter verwenden: i) Mobilfunksignalstärke RSSI in dBm, ii) Verwendetes Mobilfunknetz, iii) Wifi-Signalstärke RSSI in dBm, iv) Verwendetes Wifi-Netz; v) Nutzungsparameter: Signal wird für VolP, grundlegende Datenübertragung (E-Mail, Webbrowsing), Media-Streaming basic, HD, UHD verwendet, vi) Anzahl der Geräte im Setup, die mit Wifi verbunden werden. Router gleichzeitig verbunden sind, und/oder vii) Abweichung des Nutzers, wie stark sich das Mobilfunksignal in % ausgehend vom bestmöglichen Wert verschlechtern darf. Der erste Score ist ein Wert zwischen 0 und 1, der angibt, wie nahe das System am optimalen Verhältnis zwischen Zell- und Wifi an einer Position der Umgebung 100 finden konnte.

Das Verfahren zur Ermittlung des besten Standorts zur Positionierung des Repeater 15 bei zwei vorhandenen verschiedenen Funksignalen 11, 12 innerhalb der Umgebung 100 läuft beispielhaft folgendermaßen ab:
Schritt 1. Der Nutzer geht durch die Umgebung 100 und misst mittels des Funksignalstärke-Test-Geräts 300 ständig den Mobilfunk- und WLAN-Empfang in dBm. Das Funksignalstärke-Test-Geräts 300 ist z. B. ein Smartphone 300 mit einer entsprechenden App, wobei die App einen Positionierungs-Algorithmus bereitstellt. Hierdurch wird das beste verfügbare Mobilfunksignal 11 und gleichzeitig die dieser Position entsprechende Wifi-Funksignalstärke 12 gemessen, aufgezeichnet und aktualisiert.

Schritt 2: Während der Nutzer durch die Umgebung 100 geht und die Funkstärken vermisst, zeichnet das Funksignalstärke-Test-Geräts 300 ein Video oder Bilder der Umgebung 100 auf.

Schritt 3: Das Funksignalstärke-Test-Gerät 300 misst abhängig von der Bewegung des Nutzers. Wenn sich der Nutzer z.B. 10 Sekunden lang nicht bewegt, wird die Messung gestoppt.

Schritt 4: Sobald der Benutzer die Messung stoppt, ermittelt das Funksignalstärke-Test-Gerät 300 die beste Mobilfunk-Signalstärke 11, die über den Zeitraum aufgezeichnet wurde, in dem sich der Nutzer beim Start der Messung bewegte. In diesem Beispiel war die beste aufgezeichnete Mobilfunk-Signalstärke -50dBm in dem Arbeitszimmer 2.

Schritt 5: Das Funksignalstärke-Test-Gerät 300 sucht nun nach einem Standort innerhalb der aufgezeichneten Parameter, an dem die Mobilfunk-Signalstärke -50 dBm mit einer maximalen Abweichung von 10 % beträgt, wobei diese maximale Abweichung von dem Nutzer festlegbar ist. Das bedeutet, dass das Funksignalstärke-Test-Gerät 300 prüft, welcher Standort die beste Wifi-Signalstärke innerhalb eines Mobilfunksignalstärkebereichs zwischen -50 und -55 dBm für diese Position hatte, und berechnet entsprechend den ersten Score.

Schritt 6: Sobald das Funksignalstärke-Test-Gerät 300 den ersten Score berechnet hat, teilt es dem Benutzer den Wert mit und gibt den Prozentsatz an, mit dem eine optimale Platzierung gefunden wurde.

Schritt 7: Wenn der Nutzer den ersten Score für ausreichend hält, wird er zu dieser Position geführt, damit der Repeater 15 dort für eine optimale Abdeckung platziert werden kann.

Schritt 8: Um die Position dem Nutzer möglichst komfortabel bekannt zu machen, zeigt das Funksignalstärke-Test-Gerät 300 ein Bild der Position an, das mit dem Zeitstempel aufgezeichnet wird, wenn die optimale Signalstärkekombination erfasst wurde. Anhand des Bildes aus dem aufgezeichneten Video kann der Benutzer den Ort mit dem besten Empfang leicht identifizieren. Dieses zielgerichtete Anzeigen der Position wird nachstehend noch anhand der weiteren Figuren erläutert.

Schritt 9: Wenn das Funksignalstärke-Test-Gerät 300 eine Position mit einem akzeptablen ersten Score nicht identifizieren konnte, ermöglicht das Funksignalstärke-Test-Gerät 300 dem Benutzer die Parameter entsprechend anzupassen, z. B. indem der Nutzer den Schwellenwert für die Signalstärke des Mobilfunknetzes oder einen anderen Parameter anpasst.

Fig. 1b zeigt schematisch die Umgebung 100 in der Form eines geschlossenen Raumes 100 mit Wänden 102 aufweisend verschiedene erste Scores 105, 110. Die Werte des ersten Scores 105, 110 sind durch die Dichte der Punktverteilung in Fig. 1b folgendermaßen wiedergegeben: je dichter die Punkte angezeigt sind, desto höher ist der erste Score 105, 110. Dementsprechend ist der erste Score 105 höher als der erste Score 110. Es ist gezeigt, dass sich ein erster Bereich mit einem erhöhten ersten Score 105 an der Oberfläche eines Tisches 115 und sich ein zweiter Bereich mit dem erhöhten Score 105 "in der Luft" neben einer Lampe 120 befindet.

Die Umgebung 100 soll im Hinblick auf die vorhandenen Funksignalstärken 105, 110 mittels des Funksignalstärke-Test-Geräts 300, hier in der speziellen Ausgestaltung als einem Smartphone 300, dergestalt nach dem erfinderischen Verfahren ausgemessen werden, dass ein Nutzer komfortabel die Bereiche der erhöhten Funksignalstärke 105 auf dem Smartphone 300 angezeigt bekommt. Die ersten Scores 105, 110 können wie vorstehend illustriert berechnet werden.

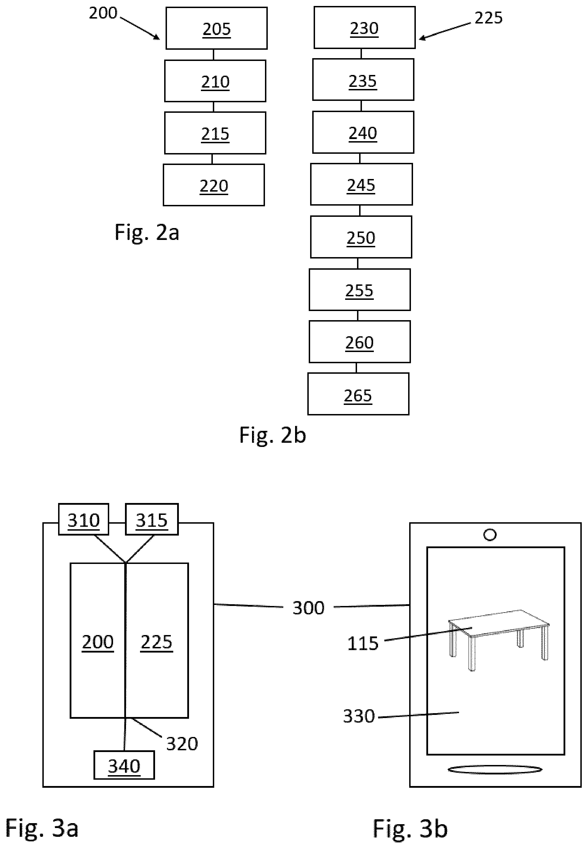

Fig. 2a zeigt ein erstes erfindungsgemäßes Verfahren 200 zur Positionierung eines funkfähigen Gerätes 15. Das funkfähige Gerät 15 kann ebenfalls das Smartphone 300 oder ein anderes funkfähiges Gerät 15, wie beispielsweise mobilfunkfähiger Repeater 15, ein Computer, etc. sein. Folgende Schritte werden bei dem ersten erfindungsgemäßen Verfahren 200 ausgeführt:
Schritt 205: Zusätzlich zu den beiden Funksignalen 11, 12 stellt das Funksignalstärke-Test-Gerät 300 auch Erfassungsmittel für Bilder und/oder für eine räumliche Lage des Funksignalstärke-Test-Geräts 300 bereit.
Schritt 210: Aufzeichnen zusätzlich zu den entsprechenden Funksignalstärken der Funksignale 11, 12 eines entsprechenden Bildes und/oder der entsprechenden räumlichen Lage des Funksignalstärke-Test-Geräts 300 an den jeweiligen verschiedenen Positionen der Umgebung 100 als Messwerte;
Schritt 215: Übergabe der Messwerte und des ersten Scores an den Positionierungs-Algorithmus, wobei der Positionierungs-Algorithmus die Messwerte und die ersten Scores vergleicht und eine Ausgabe mit einer ausgewählten Position zur Positionierung des funkfähigen Gerätes anhand eines weiteren festlegbaren Kriteriums generiert und an ein Signalisierungsmittel mittel des Funksignalstärke-Test-Geräts 300 übergibt;
Schritt 220: Signalisieren der ausgewählten Position zur Positionierung des funkfähigen Gerätes mittels des Signalisierungsmittels des Funksignalstärke-Test-Geräts 300.

Fig. 2b zeigt ein zweites erfindungsgemäßes Verfahren 225 zur Positionierung des funkfähigen Gerätes 300, also insbesondere des Smartphones 300, umfassend die folgenden Schritte:
Schritt 230: Der Benutzer definiert Zielparameter und Schwellenwerte für die Suche nach den Funksignalen 11, 12 im Hinblick auf die Funksignalstärken.

Schritt 235: Start der Bildaufnahme der Umgebung, also starten des optischen Scannens, auf dem Smartphone 300.

Schritt 240: die Kamera 310 des Smartphones 300 ist eingeschaltet und beginnt die optische Erfassung der Umgebung 100. Bei der Aufzeichnung wird die Ausrichtung des Smartphones 300 mit Hilfe seines Gyroskops 340 erfasst.

Schritt 245: der Nutzer bewegt sich durch die Umgebung 100 während die Kamera 310 weiterhin Bilder der Umgebung aufnimmt und weiterhin nach den Zielparametern scannt,

Schritt 250: das Smartphone erfasst kontinuierlich die Messwerte der Zielparameter während sich der Nutzer durch die Umgebung 100 bewegt. Die jeweiligen Zeitstempel werden den andauernden Kameraaufnahmen zugeordnet.

Schritt 255: der Nutzer beendet das Scannen und hört auf sich durch die Umgebung 100 zu bewegen;
Schritt 260: die Kameraaufnahmen werden verarbeitet und im Hinblick auf eine bestmögliche Übereinstimmung der Zielparameter und der Schwellenwerte analysiert.

Schritt 265: der Positionierungs-Algorithmus berechnet, gegebenenfalls nutzerspezifisch, folgendes:
1. Alle Zeitpunkte, an denen die Zielparameter den Schwellenwert erreicht haben, werden berechnet.
2. Für jeden Zeitstempel wird das entsprechende Bild aus der optischen Aufzeichnung für weitere Analysen extrahiert.
3. Mit Hilfe der Objekterkennung wird jedes Bild aus 2. daraufhin analysiert, ob auf einem der extrahierten Bilder ein Ort identifiziert werden kann, der gemäß den Anforderungen des Benutzers geeignet ist, z. B. ein horizontaler Platz zum Abstellen von Gegenständen oder ein vertikaler Gegenstand oder in der Nähe einer Steckdose. Die Analyse umfasst die folgenden EXIF-Daten, die in die optische Aufnahme eingebettet sind:
   a. ISO (indication of light level/brightness),
   b. Position der Aufnahme,
   c. Zeitstempel der Aufnahme,
   d. Blitzlicht (indication of light levellbrightness);
4. Zu diesem Zweck wird ein entsprechender weiterer Score für eine Übereinstimmung mit den Zielparametern berechnet und jedem Bild zugeordnet;
5. Das Bild mit dem höchsten weiteren Score wird dem Nutzer angezeigt, so dass das funkfähige Gerät entsprechend positioniert werden kann.

Die beiden vorstehend beschriebenen Verfahren 200, 225 sind nicht im Widerspruch zueinander, sondern können beide angewendet werden und sich insbesondere gegenseitig ergänzen. Dies bedeutet, dass Merkmale der beiden Verfahren 200, 225 soweit technisch möglich beliebig miteinander kombiniert werden können.

Fig. 3a zeigt schematisch das Funksignalstärke-Test-Gerät 300 beispielhaft als Smartphone 300 das zur Ausführung des erfindungsgemäßen Verfahrens eingerichtet ist.

Das Smartphone 300 umfasst hierzu eine Kameraeinheit 310 zum Aufnehmen von Bildern und/oder Videos, eine Antenne 315 zum empfangen der Funksignale 11, 12, wobei die Antenne 315 zudem eingerichtet ist, gegebenenfalls unter Zuhilfenahme eines entsprechenden Algorithmus auf einem Prozessor 320, um die Funksignalstärke zu ermitteln. Der Prozessor 320 kann eine interne Uhr und eine Speichereinheit umfassen, wobei auf der Speichereinheit die Messwerte abgespeichert werden können. Zudem kann das Smartphone 300 Bewegungssensor 340, insbesondere ein Gyroskop 340, umfassen. Auf dem Prozessor 320 kann das Verfahren 200 und/oder das Verfahren 225 implementiert sein.

Gegebenenfalls muss der Nutzer eine bestimmte Applikation auf dem Smartphone 300 starten, damit das Verfahren zur Positionierung des funkfähigen Gerätes startet. Nachdem das Verfahren gestartet ist, bewegt sich der Nutzer mit diesen Smartphone 300 durch die Umgebung 100, wobei Bilder aufgenommen und die entsprechenden Messwerte abgespeichert und ausgewertet werden.

Der Positionierungs-Algorithmus wird in der Umgebung 100 feststellen, dass es zwei Bereiche mit hoher Funksignalstärke 105 gibt, wobei die Signalstärke in diesen Bereichen über den Zielparametern liegen. Zudem stellt der Positionierungs-Algorithmus fest, dass lediglich die hohe Funksignalstärke 105 im Bereich auf dem Tisch 115 zur Positionierung des funkfähigen Gerätes geeignet ist.

Fig. 3b zeigt, dass der Positionierungs-Algorithmus folgerichtig den Tisch 115 auswählt und diesem dem Nutzer auf seinem Display 330 präsentiert.

Der Nutzer kann nun einfach und komfortabel sein funkfähiges Gerät 15 auf dem Tisch 115 positionieren, wobei er das funkfähige Gerät mit einer zufriedenstellenden Funksignalstärke nutzen kann.

## Patentansprüche

1. Verfahren zur Ausmessung von zumindest zwei verschiedenen Funksignalen (11,12) in einer Umgebung (100) umfassend die folgenden Schritte:
• Bereitstellung eines Funksignalstärke-Test-Geräts, wobei ein Nutzer das Funksignalstärke-Test-Gerät zu verschiedenen Positionen der Umgebung bringt, wobei das Funksignalstärke-Test-Gerät (300) zumindest ein Erfassungsmittel für Funksignale aufweist;
• Aufzeichnen der jeweiligen Funksignalstärke der zwei verschiedenen Funksignale (11,12) unterschiedlicher Sendequellen an den jeweiligen verschiedenen Positionen der Umgebung (100) als Messwerte;
• Übergabe der Messwerte an einen Positionierungs-Algorithmus, wobei der Positionierungs-Algorithmus die Messwerte vergleicht und anhand eines ersten festlegbaren Kriteriums einen ersten Score für die jeweiligen Positionen basierend auf den Messwerten berechnet, wobei der erste Score einen Wert für die Güte der beiden verschiedenen Funksignale (11,12) an der jeweiligen Positionen repräsentiert,
• wobei der Positionierungs-Algorithmus die Messwerte (11,12) und die ersten Scores vergleicht und eine Ausgabe mit einer ausgewählten Position zur Positionierung eines funkfähigen Gerätes (15) anhand eines weiteren festlegbaren Kriteriums generiert und an ein Signalisierungsmittel mittel des Funksignalstärke-Test-Geräts (300) übergibt.

2. Verfahren nach Anspruch 1, wobei eine Auswahl der Position mit dem höchsten ersten Score durch das Funksignalstärke-Test-Gerät (300) und ein Signalisieren der ausgewählten Position mittels eines Signalisierungsmittels des Funksignalstärke-Test-Geräts (300) erfolgt.

3. Verfahren nach einem der vorhergehenden Ansprüche, wobei eine Positionierung eines funkfähigen Gerätes (15) an der ausgewählten Position erfolgt.

4. Verfahren nach einem der vorhergehenden Ansprüche, wobei die zwei verschiedenen Funksignale (11,12) zwei verschiedene W-LAN Funksignale unterschiedlicher Sendequellen oder ein W-LAN Funksignal und ein Mobilfunksignal sind.

5. Verfahren nach einem der vorhergehenden Ansprüche, wobei als zusätzliche Parameter an den jeweiligen verschiedenen Positionen der Umgebung folgende Messwerte aufgezeichnet werden:
• Identität des Mobilfunknetzes,
• Identität des W-LAN Netzes, und/oder
• Nutzungsparameter.

6. Verfahren nach einem der vorhergehenden Ansprüche, wobei der Positionierungs-Algorithmus bei der Berechnung des Scores ein Anfordernungsprofil berücksichtig, wobei das Anfordernungsprofil Anforderungen des Nutzers an die jeweiligen verschiedenen Funksignale auflistet.

7. Verfahren nach Anspruch 3, wobei zur Positionierung des funkfähigen Gerätes (15) in der Umgebung (100) zusätzlich die folgenden Schritte ausgeführt werden:
• Aufzeichnen der entsprechenden Funksignalstärken der zumindest zwei Funksignale (11,12), eines entsprechenden Bildes und/oder der entsprechenden räumlichen Lage des Funksignalstärke-Test-Geräts (300) an den jeweiligen verschiedenen Positionen der Umgebung (100) als zusätzliche Messwerte mittels des Funksignalstärke-Test-Geräts (300);
• Signalisieren der ausgewählten Position zur Positionierung des funkfähigen Gerätes mittels des Signalisierungsmittels des Funksignalstärke-Test-Geräts (300).

8. Verfahren nach einem der Ansprüche, wobei bei dem Aufzeichnen der Messwerte auch jeweils der entsprechende Zeitstempel aufgezeichnet und mit den Messwerten verknüpft wird.

9. Verfahren nach einem der vorhergehenden Ansprüche 7 - 8, wobei der Positionierungs-Algorithmus bei der ausgewählten Position deren Geeignetheit zur Positionierung eines funkfähigen Gerätes (15) berücksichtigt.

10. Verfahren nach einem der vorhergehenden Ansprüche, wobei die ausgewählte Position durch ein Bild der gemachten Aufzeichnung dargestellt wird, als eine Markierung in einer erzeugten Karte der Umgebung dargestellt wird und/oder als eine Navigationsanweisung für den Nutzer wiedergegeben wird.

11. Verfahren nach einem der vorhergehenden Ansprüche, wobei der Positionierungs-Algorithmus bei der Ermittlung der ausgewählten Position Zielparameter der Funksignalstärke berücksichtigt.

12. Verfahren nach Anspruch 10, wobei die Zielparameter umfassen:
• zumindest ein Zielnetzwerk, und/oder
• QoS-Zielwerte.

13. Funksignalstärke-Test-Gerät (300) eingerichtet zur Ausführung des Verfahrens nach einem der Ansprüche 1 bis 12 zur Positionierung eines funkfähigen Gerätes (15).

14. Funksignalstärke-Test-Gerät (300) nach Anspruch 13, **dadurch gekennzeichnet, dass** das Funksignalstärke-Test-Gerät (300) als das funkfähige Gerät (15) ausgebildet ist, insbesondere ist das funkfähige Gerät als WiFi Repeater ausgebildet.

15. Funksignalstärke-Test-Gerät (300) nach einem der Ansprüche 13 bis 14, **dadurch gekennzeichnet, dass** das Funksignalstärke-Test-Gerät (300) ein Feedbackmodul aufweist, das eine korrekte Scangeschwindigkeit der Funksignalstärke, insbesondere durch einen Nutzer, signalisiert.

## Claims

1. A method for measuring at least two different radio signals (11, 12) in an environment (100) comprising the following steps:
• providing a radio signal strength test instrument, wherein a user brings the radio signal strength test instrument into different positions in the environment, wherein the radio signal strength test instrument (300) includes at least one acquisition means for radio signals;
• recording the respective radio signal strength of the two different radio signals (11, 12) of different transmission sources at the respective different positions in the environment (100) as measured values;
• transferring the measured values to a positioning algorithm, wherein the positioning algorithm compares the measured values and using a first definable criterion calculates a first score for the respective positions on the basis of the measured values, wherein the first score represents a value for the quality of the two different radio signals (11, 12) at the respective positions,
• wherein the positioning algorithm compares the measured values (11, 12) and the first scores, and generates an output with a selected position for positioning an instrument (15) with wireless capability using a further definable criterion, and transfers said output to a signalisation means of the radio signal strength test instrument (300).

2. The method according to Claim 1, wherein the position with the highest first score is selected by the radio signal strength test instrument (300), and a signalisation of the selected position is carried out using a signalisation means of the radio signal strength test instrument (300).

3. The method according to any one of the preceding claims, wherein a positioning of an instrument (15) with wireless capability at the selected position takes place.

4. The method according to any one of the preceding claims, wherein the two different radio signals (11, 12) are two different W-LAN radio signals from different transmission sources or one W-LAN radio signal and one mobile radio signal.

5. The method according to any one of the preceding claims, wherein the following measured values are recorded as additional parameters at the respective different positions in the environment:
• identity of the mobile radio network,
• identity of the W-LAN network, and/or
• usage parameters.

6. The method according to any one of the preceding claims, wherein the positioning algorithm takes a requirements profile into consideration during calculation of the score, wherein the requirements profile lists the user's requirements with regard to each of the different radio signals.

7. The method according to Claim 3, wherein in order to position the instrument (15) with wireless capability in the environment (100) the following steps are carried out additionally:
• recording the corresponding radio signal strengths of the at least two radio signals (11, 12) of a corresponding image and/or of the corresponding spatial orientation of the radio signal strength test instrument (300) at the respective different positions of the environment (100) as additional measured values using the radio signal strength test instrument (300);
• signalising the selected position for positioning of the instrument with wireless capability using the signalisation means of the radio signal strength test instrument (300).

8. The method according to one of the claims, wherein with each recording of the measured values the corresponding timestamp is also recorded and linked to the measured values.

9. The method according to one of the preceding claims 7 - 8, wherein the positioning algorithm takes into account the suitability of the selected position for positioning an instrument (15) with wireless capability.

10. The method according to any one of the preceding claims, wherein the selected position is illustrated by an image of the recording made, represented as a marking in a map generated of the environment and/or reproduced as a navigation instruction for the user.

11. The method according to any one of the preceding claims, wherein the positioning algorithm takes target parameters of the radio signal strength into consideration when calculating the selected position.

12. The method according to Claim 10, wherein the target parameters include:
• at least one target network, and/or
• QoS target values.

13. A radio signal strength test instrument (300) configured to carry out the method according to any one of Claims 1 to 12 for the positioning of an instrument (15) with wireless capability.

14. The radio signal strength test instrument (300) according to Claim 13, **characterized in that** the radio signal strength test instrument (300) is embodied as the instrument (15) with wireless capability, in particular the instrument with wireless capability is embodied as a WiFi repeater.

15. The radio signal strength test instrument (300) according to one of Claims 13 to 14, **characterized in that** the radio signal strength test instrument (300) includes a feedback module, which signalises a correct scan speed of the radio signal strength, in particular by a user.

## Revendications

1. Procédé de mesure d'au moins deux signaux radio différents (11, 12) dans un environnement (100), comprenant les étapes suivantes :
• la fourniture d'un appareil de test de puissance du signal radio, dans lequel un utilisateur déplace l'appareil de test de puissance du signal radio à différents emplacements de l'environnement, dans lequel l'appareil de test de puissance du signal radio (300) présente au moins un moyen de détection des signaux radio ;
• l'enregistrement des puissances de signal radio respectives des deux signaux radio (11, 12) différents provenant de différentes sources d'émission à différents emplacements de l'environnement (100) comme valeurs de mesure ;
• le transfert des valeurs de mesure à un algorithme de positionnement, dans lequel l'algorithme de positionnement compare les valeurs de mesure et, sur la base d'un premier critère prédéfini, calcule un premier score pour l'emplacement respective, sur la base des valeurs de mesure, dans lequel le premier score représente une valeur de la qualité des deux signaux radio (11, 12) différents aux emplacements respectifs,
• dans lequel l'algorithme de positionnement compare les valeurs de mesure (11, 12) et les premiers scores, puis génère une sortie indiquant une emplacement sélectionnée pour le positionnement d'un appareil radio (15) sur la base d'un critère supplémentaire prédéfini et la transmet à un dispositif de signalisation de l'appareil de test de puissance du signal radio (300).

2. Procédé selon la revendication 1, dans lequel l'appareil de test de puissance du signal radio (300) sélectionne l'emplacement présentant le premier score le plus élevé et signale l'emplacement sélectionné au moyen d'un moyen de signalisation de l'appareil de test de puissance du signal radio (300).

3. Procédé selon une des revendications précédentes, dans lequel un appareil radio (15) est positionné à l'emplacement sélectionné.

4. Procédé selon une des revendications précédentes, dans lequel les deux signaux radio différents (11, 12) sont soit deux signaux radio W-LAN différents provenant de sources d'émission différentes, soit un signal radio W-LAN et un signal de réseau mobile.

5. Procédé selon une des revendications précédentes, dans lequel les valeurs de mesure suivantes sont enregistrées comme paramètres supplémentaires aux différents emplacements respectives dans l'environnement :
• l'identité du réseau mobile,
• l'identité du réseau W-LAN, et/ou
• les paramètres d'utilisation.

6. Procédé selon une des revendications précédentes, dans lequel l'algorithme de positionnement prend en compte un profil d'exigences lors du calcul du score, dans lequel le profil d'exigences répertorie les exigences de l'utilisateur pour les différents signaux radio.

7. Procédé selon la revendication 3, dans lequel les étapes supplémentaires suivantes sont exécutées pour positionner l'appareil radio (15) dans l'environnement (100) :
• l'enregistrement, à l'aide du dispositif de mesure de puissance du signal radio (300), des intensités des signaux radio correspondantes d'au moins deux signaux radio (11, 12), de l'image correspondante et/ou de la position spatiale correspondante du dispositif de mesure de puissance du signal radio (300) aux différents emplacements respectifs de l'environnement (100) ;
• la signalisation de l'emplacement sélectionnée pour le positionnement du appareil radio à l'aide du moyen de signalisation du dispositif de mesure de puissance du signal radio (300).

8. Procédé selon une des revendications, dans lequel l'horodatage correspondant lors de l'enregistrement des valeurs de mesure est également enregistré et associé aux valeurs de mesure.

9. Procédé selon une des revendications 7 et 8 précédentes, dans lequel l'algorithme de positionnement tient compte de la pertinence de l'emplacement sélectionné pour le positionnement d'un appareil radio (15).

10. Procédé selon une des revendications précédentes, dans lequel l'emplacement sélectionnée est représenté par une image de l'emplacement enregistré, sous forme de marqueur sur une carte générée de l'environnement et/ou sous forme d'instruction de navigation pour l'utilisateur.

11. Procédé selon une des revendications précédentes, dans lequel l'algorithme de positionnement prend en compte les paramètres cibles de la puissance du signal radio lors de la détermination de l'emplacement sélectionnée.

12. Procédé selon la revendication 10, dans lequel les paramètres cibles comprennent :
• au moins un réseau cible, et/ou
• des valeurs cibles de QoS.

13. Appareil de test de puissance du signal radio (300) configuré pour mettre en œuvre le procédé selon une des revendications 1 à 12 afin de positionner un appareil radio (15).

14. Appareil de test de puissance du signal radio (300) selon la revendication 13, **caractérisé en ce que** ledit dispositif (300) est configuré comme un appareil radio (15), notamment comme un répéteur W-LAN.

15. Appareil de test de puissance du signal radio (300) selon une des revendications 13 à 14, **caractérisé en ce que** l'appareil de test de puissance du signal radio (300) présente un module de retour d'information, qui signale une vitesse de balayage correcte de la puissance du signal radio, notamment par un utilisateur.
